Europäisches Patentamt

European Patent Office

Office européen des brevets

(11) Veröffentlichungsnummer: **0 205 213**
**B1**

(12) # EUROPÄISCHE PATENTSCHRIFT

(45) Veröffentlichungstag der Patentschrift:
09.05.90

(51) Int. Cl.⁵: **H01G 9/05, H01G 9/08**

(21) Anmeldenummer: 86200960.2

(22) Anmeldetag: 02.06.86

(54) Elektrolytischer Trockenkondensator.

(30) Priorität: 03.06.85 NL 8501584

(43) Veröffentlichungstag der Anmeldung:
17.12.86 Patentblatt 86/51

(45) Bekanntmachung des Hinweises auf die Patenterteilung:
09.05.90 Patentblatt 90/19

(84) Benannte Vertragsstaaten:
BE DE FR GB SE

(56) Entgegenhaltungen:
DE-C- 935 804
FR-A- 1 260 261
NL-A- 7 009 112
US-A- 2 005 279
US-A- 3 359 191
US-A- 3 950 842

CHEMICAL ABSTRACTS, Band 80, Nr. 22, 3. Juni 1974,
Seite 349, Zusammenfassung Nr. 125836k, Columbus,
Ohio, US; V.M. LASKOVA: "Improvement in the quality
of a manganese dioxide layer in aluminum
oxide-semiconductor capacitors", & ELEKTROPROM.
PRIBOROSTR. 1973, 8(8), 293-5 000

(73) Patentinhaber: N.V. Philips' Gloeilampenfabrieken,
Groenewoudseweg 1, NL-5621 BA Eindhoven(NL)

(72) Erfinder: Dekker, Albert p/A INT. OCTROOIBUREAU
B.V., Prof. Holstlaan 6, NL-5656 AA Eindhoven(NL)
Erfinder: Dekker, Evert H. L. J., p/A INT.
OCTROOIBUREAU B.V. Prof. Holstlaan 6, NL-5656 AA
Eindhoven(NL)

(74) Vertreter: Pennings, Johannes et al, Internationaal
Octrooibureau B.V. Prof. Holstlaan 6, NL-5656 AA
Eindhoven(NL)

**Beschreibung**

"Elektrolytischer Trockenkondensator".

Die Erfindung bezieht sich auf einen elektrolytischen Trockenkondensator gemäss dem Oberbegriff von Anspruch 1, wie er zum Beispiel aus der US-A-3 950 842 bekannt ist.

Das Mangandiodix wird dadurch erhalten, dass der oxidierte Anodenkörper benetzt oder mit einer Lösung eines Mangansalzes, das nach Erhitzung durch Pyrolyse in Mangandioxid umgewandelt wird, imprägniert wird.

Die Form der Kathode ist von der spezifischen Ausführungsform des Kondensators abhängig. Bei einem Trocken-Tantalkondensator mit einer porösen gesinterten Anode oder bei einem Kondensator mit einer aus einer Aluminiumplatte gestanzten, gebeizten und gefalteten Anode besteht die Kathode aus einer mehrfachen Schicht aus Graphit, Silber und Zinn die auf dem formierten, imprägnierten und pyrolysierten Anodenkörper abgelagert ist. Bei dem trockenen Aluminiumfolienwickelkondensator besteht die Kathode aus einer gebeizten Aluminiumfolie, die zusammen mit mindestens zwei Trennfolien gewickelt ist. Der Kondensator wird in einer Umhüllung aus elektrisch isolierendem Material eingebaut, das aus beispielsweise Silikonenharz, Epoxyharz, Polystyrol oder Polyester besteht.

Die Impedanz Z bei 100 kHz und der Verlustfaktor (tgδ) dieser Kondensatoren werden im allgemeinen bei Verwendung bei höheren Temperaturen und während längerer Zeit höher und die Kapazität niedriger.

Die Lebensdauerprüfung wird bei 125°C durchgeführt, und Anforderung dabei ist, dass die Zunahme von Z und tgδ nach 2000 Stunden den Wert 20% nicht überschreitet.

Es wird vorausgesetzt, daß die Ursache dieser Erhöhung der Impedanz und des tgδ bei einer Dissoziation von $MnO_2$ bei höherer Temperatur liegt, wobei Sauerstoff abgegeben wird. Dieser Sauerstoff reagiert danach mit dem Material der Umhüllung, die dadurch allmählich zersetzt wird. Die Dissoziation des Mangandioxids ist dadurch irreversibel geworden, wobei die niedrigeren Manganoxide für eine Verringerung der Leitfähigkeit verantwortlich sind.

In der GB-PS 885965, die sich auf einen elektrolytischen Trockenkondensator bezieht, sind die obengenannten Phänomene bei Verwendung bei höherer Temperatur beschrieben. Damit die Verringerung der Kapazität und die Zunahme des Leckstromes verringert werden, wird laut dieser Veröffentlichung empfohlen, in der hermetisch geschlossenen Umhüllung Sauerstoff oder eine sauerstoffspendende Substanz hinzuzugeben. Als Quelle für die sauerstoffspendende Verbindung werden genannt: Silberperoxid, Bariumperoxid oder Perchlorate.

Diesen Zugaben haften jedoch einige Nachteile in einem industriellen Herstellungsverfahren an. Ausserdem muss das Einführen von Stoffen, die dem Kondensator fremd und relativ aggressiv sind, vermieden werden, damit die elektrischen Eigenschaften des Kondensators nicht beeinträchtigt werden.

Nach der Erfindung kann das Braunsteinpulver in dem Material der Umhüllung in feindisperser Form oder lose vorhanden sein.

Das dazu zu verwendende Braunsteinpulver kann ebenso wie das in dem Kondensator selbst vorhandene Braunstein durch Pyrolyse einer Manganverbindung erhalten werden.

Das sog. elektrolytische Braunstein ist jedoch wesentlich reaktiver und dadurch effektiver im Rahmen der Erfindung. Diese Sorte wird daher deutlich bevorzugt.

Elektrolytischer Braunstein wird durch Elektrolyse einer Mangan(II)-Salzlösung erhalten, beispielsweise eine Lösung von Mangan(II)-Sulfat, wobei $MnO_2$ an der Anode niederschlägt und an der Kathode Wasserstoff entweicht.

Zur Erläuterung der Erfindung wird ein Beispiel beschrieben.

Pyrolysierte Zellen eines trockenen Aluminiumkondensators mit einer aus einer Aluminiumplatte gestanzten, gebeizten und gefalteten Anode mit einer Kapazität von 6,8 μF und mit einer Arbeitsspannung von 25 V wurden durch Lackierung mit einem durch Erhitzung bei 160°C aushärtbaren Epoxyformaldehydharz umhüllt.

Eine Anzahl Zellen wurden als Bezugsmaterial auf diese Weise umhüllt, in eine Kunststoffhülle eingegeben und mit einem Epoxyharz auf Basis des Diglycydyläthers von Bisphenol A ausgegossen. Bei einer zweiten Reihe wurden die Zellen mit einer Suspension desselben Epoxyformaldehydharzes ergänzt mit 20% elektrolytischem Braunsteinpulver mit einer mittleren Teilchengrösse von 50 μm, lackiert, bei 160°C ausgehärtet und wie die Bezugsausführungsform ausgebildet.

In der Tafel sind die Werte der Kapazität in μF, der Verlustfaktor tgδ, beide bei 100 Hz und die Impedanz Z bei 100 kHz in Ohm angegeben nach unterschiedlichen Zeitdauern in Stunden des Lagerversuches bei 125°C.

TAFEL

Lagerversuch bei $125^{\circ}$C an $6,8$ µF $-$ 25 V Kondensatoren.

| t Stunden | Lack ohne $MnO_2$ (Bezugswert) | | | Lack mit $MnO_2$ (Erfindung) | | |
|---|---|---|---|---|---|---|
| | Kap (µF) | tg $\delta$ | $Z_{100\ kHz}$ (Ohm) | Kap (µF) | tg $\delta$ | $Z_{100\ kHz}$ (Ohm) |
| 0 | 7,0 | 0,047 | 1,05 | 7,3 | 0,032 | 0,732 |
| 68 | 6,7 | 0,044 | 1,15 | 7,1 | 0,028 | 0,726 |
| 140 | 6,6 | 0,048 | 1,19 | 7,0 | 0,031 | 0,733 |
| 236 | 6,6 | 0,051 | 1,21 | 7,0 | 0,031 | 0,729 |
| 336 | 6,5 | 0,052 | 1,23 | 7,0 | 0,028 | 0,726 |
| 571 | 6,4 | 0,058 | 1,28 | 6,9 | 0,033 | 0,733 |
| 735 | 6,4 | 0,057 | 1,27 | 7,0 | 0,029 | 0,728 |
| 1000 | 6,5 | 0,058 | 1,27 | 7,0 | 0,033 | 0,726 |
| 1622 | 6,4 | 0,056 | 1,24 | 6,9 | 0,032 | 0,725 |

**Patentansprüche**

1. Elektrolytischer Trockenkondensator mit einer Umhüllung, mit Mangandioxid als halbleitender Verbindung und einem Anodenkörper aus einem filmbildenden Metall, das durch anodische Oxidation mit einer dielektrischen Oxidhaut versehen ist, wobei in dem Kondensator pulverförmiger Braunstein vorhanden ist, dadurch gekennzeichnet, dass der pulverförmige Braunstein in feindisperser Form oder lose in dem Material der Umhüllung vorhanden ist.

2. Kondensator nach Anspruch 1, dadurch gekennzeichnet, dass elektrolytischer Braunstein verwendet wird.

**Claims**

1. A solid electrolytic capacitor comprising a housing and having manganese dioxide as a semiconductor compoud and an anode body of a film-forming metal which is provided with a dielectric oxide film by means of anodic oxidation, powdery manganese dioxide being present in the capacitor, characterized in that the powdery manganese dioxide is present in the material of the housing in a finely dispersed or loose form.

2. A capacitor as claimed in Claim 1, characterized in that electrolytic manganese dioxide is used.

**Revendications**

1. Condensateur électrolytique sec muni d'une enveloppe contenant du dioxyde de manganèse comme composé semiconducteur et comportant un corps anodique en un métal formateur de film, qui est muni par oxydation anodique d'une pellicule d'oxyde diélectrique, du dioxyde de manganèse pulvérulent étant présent dans le condensateur, caractérisé en ce que le dioxyde de manganèse pulvérulent est présent sous forme finement dispersée ou séparée dans le matériau de l'enveloppe.

2. Condensateur selon la revendication 1, caractérisé par l'utilisation de dioxyde de manganèse électrolytique.